# EUROPEAN PATENT SPECIFICATION

(11) **EP 2 517 902 B1**
(45) Date of publication and mention of the grant of the patent: **15.06.2016**
(21) Application number: 09852577.7
(22) Date of filing: 25.12.2009
(51) Int. Cl.: B60C 11/03

(54) **PNEUMATIC TIRE TREAD**
LUFTREIFENPROFIL
BANDE DE ROULEMENT DE PNEUMATIQUE

(43) Date of publication of application: 31.10.2012
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: TAKANO Hideaki, Aichi 46000024 (JP)
(74) Representative: Diernaz, Christian
(86) International application number: PCT/JP2009/071651
(87) International publication number: WO 2011/077562

(56) References cited:
- EP-A1- 0 659 593
- WO-A1-2004/103737
- WO-A1-2009/034959
- JP-A- 2003 326 919
- JP-A- 2008 238 867
- JP-A- 2009 067 173
- US-A1- 2005 183 807

## Description

### [Technical Field]

The present invention relates to a tread for a pneumatic tyre, and more specifically it relates to a tread for a pneumatic tyre in which air column resonance and tread pattern noise are reduced at the same time.

### [Prior Art]

Air column resonance in the circumferential grooves formed in tyre treads is produced by resonance in the tubes (air columns) formed by these circumferential grooves and the road surface, and the resonance frequency thereof depends on the length of the air columns in the circumferential grooves which are formed with the road surface.

Air column resonance is manifested in the form of noise inside and outside a vehicle, and in many cases it has a peak at around 1 kHz which is readily caught by the human ear. In conventional technology for reducing the air column resonance in the circumferential grooves, resonators having a branch groove shape whereof one end opens into a circumferential groove formed in the tread and, branching from the open end, the other end terminates in a land part (rib) of the tread, are formed in the tread, and these resonators cause a reduction in air column resonance (Patent Document 1, for example, which discloses a tread according to the preamble of claim 1).

Furthermore, Figure 1 of Patent Document 2 shows technology in which the tread is provided with branch groove-shaped resonators whereof one end opens into a circumferential groove and the other end terminates in a land part, and resonators of a different type to the branch groove shape, which are known as Helmholtz resonators, for reducing air column resonance.

Figure 1 of Patent Document 3 shows technology in which the tread is provided with lateral grooves which communicate with two circumferential grooves, and a plurality of resonators known as Helmholtz resonators, for reducing air column resonance.

Figure 1 of Patent Document 4 shows technology in which the tread is provided with branch groove-shaped resonators having a bent-back shape in which one end opens into a circumferential groove and the other end terminates in a land part, and branch groove-shaped resonators provided with sub-grooves, for reducing air column resonance.

### [Prior Art Documents]

### [Patent Documents]

[Patent Document 1] Republished Patent WO2004/103737
[Patent Document 2] Japanese Unexamined Patent Application Publication 2008-308131
[Patent Document 3] Japanese Unexamined Patent Application Publication 2008-238867
[Patent Document 4] Japanese Unexamined Patent Application Publication 2006-151309

### [Summary of the Invention]

### [Issues to be Resolved by the Invention]

However, there are problems in that the branch grooves need to be greater than a certain length in order to make the resonators formed by the branch groove shape act effectively, and when ribs formed with such branch grooves enter the contact surface, tread pattern noise is produced by the actual resonators formed from the branch grooves along with fluctuations in the energy produced by the ribs striking the road surface.

Tread pattern noise in this case is tyre noise which is produced by fluctuations in the energy generated when the grooves extending obliquely or widthwise across the tread, such as the lateral grooves, continuously strike the road surface, depending on the pattern which is carved on the tread. The frequency of tread pattern noise depends on the speed, and varies along with the speed. This tread pattern noise also constitutes a source of noise inside and outside the vehicle.

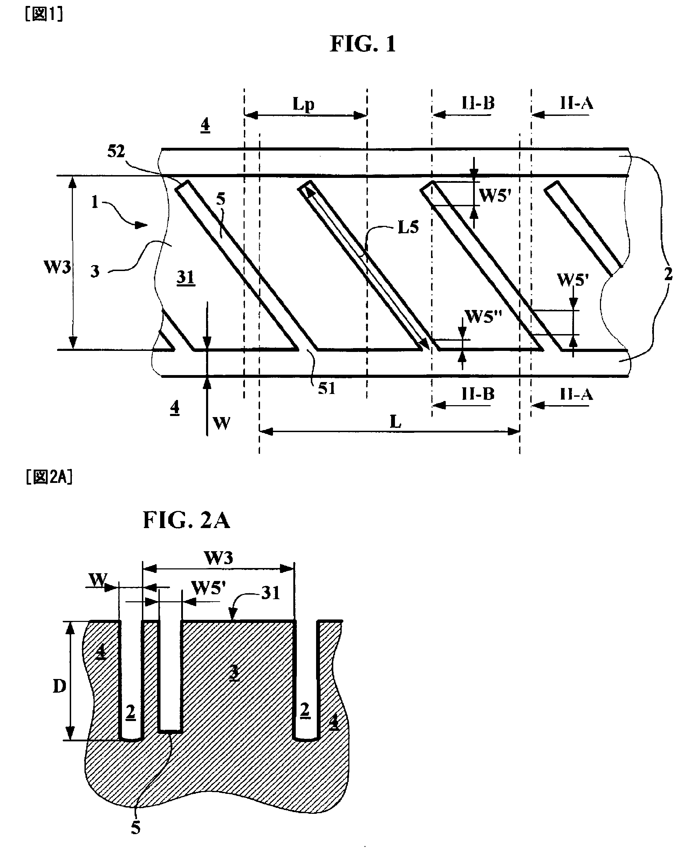

When the resonators are arranged in the manner shown in Figure 1 of Patent Documents 2 to 4, adjacent resonators need to be provided at least a prescribed distance apart over the length of the contact surface in the direction of rotation of the tyre. In these cases, the tread pattern noise produced by the resonators is generated in different frequency bands to the frequency band which is damped by the resonators, and therefore the tread pattern noise generated by the resonators themselves constitutes a problem in the resonators from Patent Documents 2 to 4.

The present invention has therefore been devised in order to resolve the problems of the prior art, and it aims to provide a pneumatic tyre which makes it possible to reduce tread pattern noise while at the same time effectively suppressing air column resonance produced by the circumferential grooves.

### [Means of Resolving the Issues]

In order to achieve the above aims, the present invention relates to a pneumatic tyre tread comprising at least two circumferential grooves; at least one intermediate rib formed between the circumferential grooves; two shoulder ribs which are each formed outside the circumferential grooves in the width direction of the tyre; and resonators which are formed with a groove shape in which one end opens into at least one circumferential groove and the other end terminates in the intermediate rib and which reduces air column resonance in the circumferential grooves; in the resonators, a plurality of branch grooves comprising openings which open into at least one circumferential groove and end parts which terminate in the intermediate rib are formed in such a way as to open over the whole contact surface, the pneumatic tyre tread being characterized in that: the length L5 of the branch grooves of the resonators is at least 40% of the length L of the contact surface measured in a circumferential direction, and the groove width W5 is between 10% and 25% of the circumferential groove width W, when the tyre is mounted on a standard rim and inflated to the nominal inflation pressure, and the nominal load is applied; the projected length in the lateral direction of the branch grooves of the resonators is at least 95% of the pitch length Lp, when the tyre is mounted on a standard rim and inflated to the nominal inflation pressure, and the nominal load is applied; and the difference between the minimum cross-sectional void ratio in the intermediate rib where the branch grooves of the resonators are formed and the maximum cross-sectional void ratio in said intermediate rib is no greater than 10%.

In this instance, "groove" refers to a space having width and depth which are defined by two wall surfaces, and which do not come into contact each other under normal usage conditions.

Furthermore, "circumferential groove" refers to a groove which extend in the circumferential direction of the tyre; this includes not only linear grooves, but also grooves extending in a zigzag or wave-like fashion around the whole circumference of the tyre.

Furthermore, "lateral groove" refers to a groove extending across the width of the tyre; these may be grooves in which both ends open into a circumferential groove, grooves in which one end opens into a circumferential groove and the other end terminates in a land part (rib), or grooves in which both ends terminate in land parts, among other things. This includes not only linear lateral grooves, but also grooves extending in a zigzag or wave-like fashion, or grooves having a varied width.

Furthermore, "branch groove" refers to a groove having a shape in which one end opens into a circumferential groove and the other end terminates in a land part (rib). Branch groove is one of a form of lateral groove.

Furthermore, "contact surface" refers to the surface region of the tread which comes into contact with the road surface when the tyre is mounted on a standard rim, which is determined by industry standards to be described below, and inflated to the nominal inflation pressure, and the nominal load is applied. Furthermore, the "contact surface length" refers to the length of the contact surface in the direction of rotation of the tyre.

Furthermore, the "standards" are regulations determined by the industry standards in force in the region where the tyres are produced or used. For example, the industry standards in Europe are found in the "Standards Manual" of the ETRTO (The European Tyre and Rim Technical Organization); the industry standards in the US are found in the "Year Book" of the TRA (The Tire and Rim Association, Inc.); and the industry standards in Japan are found in the "JATMA Year Book" of the Japan Automobile Tyre Manufacturers' Association (JATMA). Furthermore, a "standard rim" refers to a rim which is stipulated in these standards according to the size of the tyre; "rated internal pressure" refers to the air pressure stipulated in these standards in correspondence to the load capacity; and "nominal load" refers to the maximum permitted mass in these standards which can be loaded on the tyre.

Furthermore, the "cross-sectional void ratio" refers to the proportion of the total length of a specified portion (one rib in the present invention) of the tyre surface along an axis parallel to the axis of rotation of the tyre, which is occupied by the length of the part of the same specified portion of the tyre surface along the same axis which is not in contact with the ground (the branch groove portion in the present invention).

Furthermore, the "pitch length" refers to the length of one unit of a limited number of consecutive repeated patterns in the tread pattern, measured on the tread along the direction of rotation of the tyre. In the present invention, this refers to the space between adjacent branch grooves, and refers to the space between an intermediate point in the projected length in the lateral direction of a prescribed branch groove and an intermediate point in the projected length in the lateral direction of an adjacent branch groove.

According to the present invention configured in the above manner, in the resonators for reducing air column resonance in the circumferential grooves, a plurality of branch grooves comprising openings which open into at least one circumferential groove and end parts which terminate in the intermediate rib are formed in such a way as to open over the whole contact surface. The basic principle of this kind of resonator lies in the fact that some of the sound waves propagated by the circumferential grooves are propagated into the branch-groove resonators and are reflected by the end parts of the branch grooves, and again returned to the circumferential grooves. The fact that the sound waves travel back and forth along the branch grooves means that when the sound waves propagated to the branch grooves have returned to the circumferential grooves, the phase thereof is different to that of the sound waves in the circumferential grooves. This phase difference causes interference in the sound waves, and as a result air column resonance in the circumferential grooves is reduced.

According to the present invention, a plurality of such resonators are formed in the intermediate rib in such a way as to open over the whole contact surface, and therefore air column resonance can be more reliably reduced in the circumferential grooves.

In addition, the length L5 of each of the plurality of branch grooves in the resonators is at least 40% of the length L of the contact surface measured in the circumferential direction when the tyre is mounted on a standard rim and inflated to the nominal inflation pressure, and the nominal load is applied, and therefore it is possible to achieve the length needed in order to reduce the air column resonance in the circumferential grooves and to effectively achieve an effect whereby the air column resonance is reduced.

In addition, the groove width W5 of each of the plurality of branch grooves in the resonators is between 10% and 25% of the circumferential groove width W, when the tyre is mounted on a standard rim and inflated to the nominal inflation pressure, and the nominal load is applied, and therefore it is possible to suppress the phenomenon of the first branch grooves on the contact surface being closed off by the load, and the resonator effect no longer being demonstrated, while it is also possible to suppress the influence on other essential aspects of tyre performance due to a greater proportion of the rib being occupied by the first branch grooves.

In addition, the difference between the minimum cross-sectional void ratio in the intermediate rib where the branch grooves of the resonators are formed and the maximum cross-sectional void ratio in said intermediate rib is no greater than 10%, and therefore the rib width excluding the groove portions of the branch grooves in the rib is generally constant around the tyre, which means that it is possible for the most part to regularize fluctuations in the energy from striking the road surface when the rib formed with the branch grooves enters the contact surface; as a result, it is possible to reduce the tread pattern noise. It should be noted that if the difference between the minimum cross-sectional void ratio and the maximum cross-sectional void ratio is greater than 10%, fluctuations in the energy from striking the road surface increase, and as a result the tread pattern noise reducing effect becomes smaller.

In addition, the projected length in the lateral direction of each of the plurality of branch grooves in the resonators is at least 95% of the pitch length Lp, when the tyre is mounted on a standard rim and inflated to the nominal inflation pressure, and the nominal load is applied, and therefore it is possible to easily design the tread in such a way that the difference between the minimum cross-sectional void ratio in the intermediate rib where the plurality of branch grooves are arranged and the maximum cross-sectional void ratio in said intermediate rib is no greater than 10%.

The results of the above points mean that it is possible to reduce the tread pattern noise while also effectively suppressing air column resonance produced by the circumferential grooves over a plurality of frequency bands.

According to the present invention, the openings and end parts of the branch grooves of the resonators are preferably present within a region in the contact surface delimited by spaces which extend parallel to the axis of rotation of the tyre and are equal to the groove width W of the circumferential grooves.

According to the present invention configured in the above manner, the openings and end parts of the branch grooves of the resonators are present within a region in the contact surface delimited by spaces which extend parallel to the axis of rotation of the tyre and are equal to the groove width of the circumferential grooves, and therefore it is possible to shorten the length between two consecutive openings in the direction of rotation of the tyre, while the prescribed branch groove length is maintained. This means that a larger number of resonators formed by the branch grooves can be arranged within the contact surface, and as a result, air column resonance can be more effectively reduced.

According to the present invention, preferably the branch grooves of the resonators have a first portion including the opening and a second portion including the end part, and the angle A between the first portion and the second portion is less than 90°.

According to the present invention configured in the above manner, the branch grooves of the resonators are formed in such a way that the angle between the first portion including the opening and the second portion including the end part is less than 90°, and therefore it is possible to easily design the tread in such a way that the difference between the minimum cross-sectional void ratio in the rib where the branch grooves are arranged and the maximum cross-sectional void ratio in said rib is no greater than 10%. This means that the rib width excluding the groove portion thereof is generally constant around the tyre. That is to say, it is possible for the most part to regularize fluctuations in the energy from striking the road surface when the rib enters the contact surface; as a result, it is possible to reduce the tread pattern noise.

According to the present invention, preferably the circumferential grooves comprise first circumferential grooves and second circumferential grooves; the branch grooves of the resonators comprise first branch grooves having a first opening which opens into the first circumferential groove and a first end part which terminates in the intermediate rib, and second branch grooves having a second opening which opens into the second circumferential groove and a second end part which terminates in the intermediate rib; and the first openings of the first branch grooves of the resonators and the second openings of the second branch grooves open alternately from the intermediate rib in a continuous fashion in the direction of rotation of the tyre into the first circumferential groove and the second circumferential groove, respectively.

According to the present invention configured in the above manner, the first openings of the first branch grooves of the resonators and the second openings of the second branch grooves open alternately from the intermediate rib in a continuous fashion in the direction of rotation of the tyre into the first circumferential groove and the second circumferential groove, respectively, and therefore it is possible to reduce the air column resonance from two circumferential grooves at the same time by means of the first and second branch grooves which are formed on one intermediate rib.

### [Advantages of the Invention]

With the pneumatic tyre tread according to the present invention, it is possible to reduce tread pattern noise while at the same time effectively suppressing air column resonance produced by the circumferential grooves, and as a result it is possible to reduce the noise level of the tyre as a whole.

### [Brief Description of the Figures]

[Figure 1] schematically shows the pneumatic tyre tread according to a first mode of embodiment of the present invention.
[Figure 2A] is an enlarged view in cross section of the tyre tread seen along the line IIA-IIA in Figure 1.
[Figure 2B] is an enlarged view in cross section of the tyre tread seen along the line IIB-IIB in Figure 1.
[Figure 3] schematically shows the pneumatic tyre tread according to a second mode of embodiment of the present invention.
[Figure 4] schematically shows the pneumatic tyre tread according to a third mode of embodiment of the present invention.
[Figure 5] schematically shows the pneumatic tyre tread according to a fourth mode of embodiment of the present invention.

### [Modes of Embodiment of the Invention]

Features and advantages of the present invention will be described next with reference to the figures which show several exemplary modes of embodiment of the present invention.

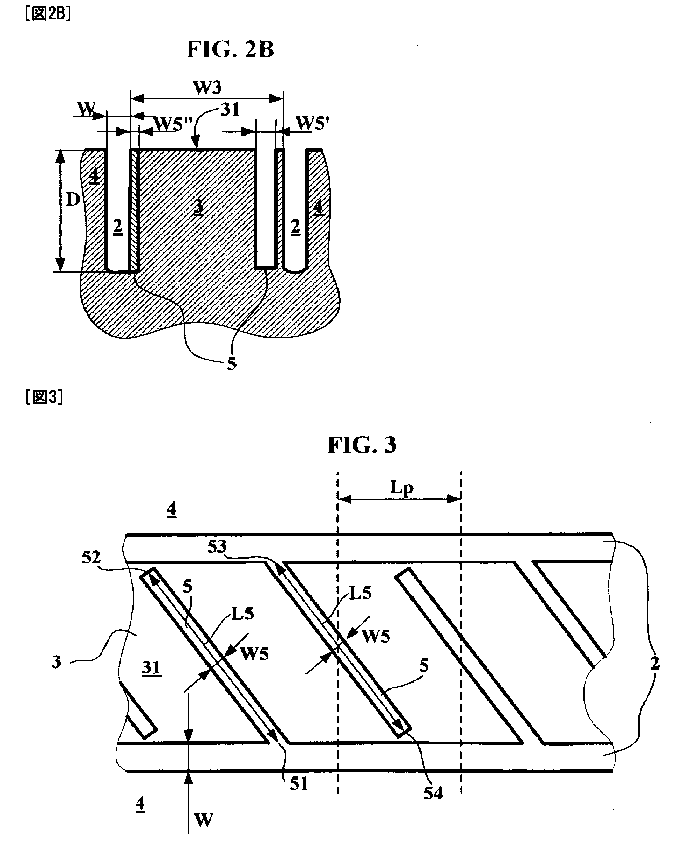

A pneumatic tyre tread according to a first mode of embodiment of the present invention will be described first of all with the aid of Figures 1 and 2.

Figure 1 schematically shows the pneumatic tyre tread according to the first mode of embodiment of the present invention; Figure 2A is an enlarged view in cross section of the tread 1 seen along the line IIA-IIA in Figure 1; and Figure 2B is an enlarged view in cross section of the tread 1 seen along the line IIB-IIB in Figure 1.

First of all, as shown in Figure 1, the symbol 1 denotes part of a tyre tread 1 according to the first mode of embodiment; in the tread 1 there are formed: two circumferential grooves 2 of width W, an intermediate rib 3 which is delimited by the circumferential grooves 2, and shoulder ribs 4 which lie outside the two circumferential grooves 2 in the width direction of the tyre. It should be noted that the tyre size in this example is 225/55R16.

The intermediate rib 3 has a surface 31 which makes contact with the road surface when the tyre is in operation. This figure shows the contact surface length L when the tyre is filled to the rated internal pressure and the nominal load is applied. It should be noted that the standard rim for this size is 7J, the rated internal pressure is 250 kPa, and the nominal load is 690 kg, according to the "ETRTO Standard Manual 2009".

A large number of branch groove-shaped resonators 5 are formed in a line in the circumferential direction of the tyre on the intermediate rib 3, and serve to reduce the air column resonance produced in the circumferential grooves 2 when the tyre is in operation.

The branch grooves 5 open at openings 51 into the circumferential groove 2, and terminate at end parts 52 on the intermediate rib 3. The branch grooves 5 have the length L5, and this length L5 is formed to be at least 40% of the contact surface length L, when the tyre is mounted on a standard rim and inflated to the nominal inflation pressure, and the nominal load is applied. In this mode of embodiment, the branch groove length L5 is 121 mm, and the contact surface length L is 145 mm. If the branch groove length L5 is less than 40% of the contact surface length L, it is not possible to achieve the length needed for the branch grooves 5 to reduce the air column resonance in the circumferential grooves 2, and the air column resonance reducing effect is lowered.

The branch groove 5 groove width is W5 and is between 10% and 25% of the width W of the circumferential grooves 2, when the tyre is mounted on a standard rim and inflated to the nominal inflation pressure, and the nominal load is applied. In this mode of embodiment, the groove width W5 of the branch grooves 5 is 2.8 mm, and the circumferential groove width W is 16 mm. If the groove width W5 of the branch grooves 5 is less than 10% of the circumferential groove width W, the branch grooves 5 in the contact surface are closed off by the load, and the effect of serving as a resonator is no longer demonstrated. Furthermore, if this width is above 25%, the proportion of the rib occupied by the branch grooves 5 is larger, and this affects other essential aspects of tyre performance.

The projected length (the length projected in the vertical direction in Figure 1) in the lateral direction (the tyre width direction) of the branch grooves 5 is at least 95% of the pitch length (the length between adjacent branch grooves 5) Lp. If the projected length in the lateral direction of the branch grooves 5 is less than 95% of the pitch length Lp, it is difficult to design the pattern in such a way that the difference between the minimum cross-sectional void ratio in the intermediate rib 3 where the branch grooves 5 of the resonators are formed and the maximum cross-sectional void ratio in said intermediate rib 3 is no greater than 10%. The pitch length Lp refers to the space between adjacent branch grooves 5, and as shown in Figure 1 refers to the space between an intermediate point in the projected length in the lateral direction of a branch groove 5 and an intermediate point in the projected length in the lateral direction of an adjacent branch groove 5.

The intermediate rib 3 where the branch grooves 5 are formed is configured in such a way that the difference between the minimum cross-sectional void ratio thereof and the maximum cross-sectional void ratio thereof is no greater than 10%. In this mode of embodiment, the minimum cross-sectional void ratio in the intermediate rib 3 is 13.8%, and the maximum is 18.3%. This is illustrated in Figure 2.

The cross-sectional void ratio will be described using Figures 1 and 2: this refers to the proportion of the total length W3 of the rib 3 on the tyre surface along an axis parallel to the axis of rotation of the tyre (the line IIA-IIA or the line IIB-IIB in Figure 1, for example) which is occupied by the length of the part of the rib 3 on the tyre surface along the same axis (the same line IIA-IIA or IIB-IIB) which is not in contact with the ground (the length W5' or the combined length of W5' and W5").

The cross section shown in Figure 2A is a typical cross section showing the minimum cross-sectional void ratio, and the cross section shown in Figure 2B is a typical cross section showing the maximum cross-sectional void ratio. For example, in the cross section shown in Figure 2A, there is one branch groove 5 which is present as a gap (W5'), whereas in the cross section shown in Figure 2B, part of the gap of the adjacent branch groove 5 is included in the region of the opening 51 of the adjacent branch groove 5, in addition to the gap of the single branch groove 5 (W5" is also included in addition to W5'). In this mode of embodiment, in addition to the relationship of the projected length in the lateral direction of the abovementioned branch grooves 5 with the pitch length, it is possible to ensure that there is no large difference between the length W5' (Figure 2A) and the two combined lengths W5' and W5" (Figure 2B) by adjusting the length L5 and the groove width W5 etc. of the branch grooves 5 and thus the difference between the minimum cross-sectional void ratio in the intermediate rib 3 and the maximum cross-sectional void ratio in said intermediate rib is no greater than 10%.

By virtue of this configuration, the rib width of the intermediate rib 3 excluding the groove portions is generally constant around the tyre, which means that it is possible for the most part to regularize fluctuations in the energy from striking the road surface when the intermediate rib 3 enters the contact surface, and as a result the tread pattern noise can be reduced.

The pneumatic tyre tread according to a second mode of embodiment of the present invention will be described next with the aid of Figure 3.

Figure 3 schematically shows the pneumatic tyre tread according to the second mode of embodiment of the present invention.

As shown in Figure 3, in the second mode of embodiment there are formed: two circumferential grooves 2 of width W, an intermediate rib 3 which is delimited by the circumferential grooves 2, and shoulder ribs 4 which lie outside the two circumferential grooves 2 in the width direction of the tyre, in the same way as in the first mode of embodiment. A plurality of branch grooves 5 are formed on the intermediate rib 3 in such a way as to be continuous on said rib 3 in the direction of rotation of the tyre.

In the second mode of embodiment, the branch grooves 5 each have a linear shape. These branch grooves 5 are formed in such a way that adjacent branch grooves 5 open alternately into the respective circumferential grooves 2 on both sides of the rib 3. To be specific, the branch grooves 5 open at the openings 51 into the circumferential groove 2 on one side, and terminate at the end parts 52 on the intermediate rib 3, while the adjacent branch grooves 5 open at the openings 53 into the circumferential groove 2 on the other side, and terminate at the end parts 54 on the intermediate rib 3.

This plurality of branch grooves 5 which are formed on a single intermediate rib 3 of this kind makes it possible to reduce the air column resonance in two circumferential grooves 2 at the same time, and also makes it possible to reduce the noise level of the tyre as a whole.

Here, the following points regarding the length, groove width and projected length in the lateral direction of the branch grooves 5 are the same as in the first mode of embodiment described above: the fact that the length L5 of the branch grooves 5 is at least 40% of the length L of the contact surface, the groove width W5 of the branch grooves 5 is between 10% and 25% of the width W of the circumferential grooves 2, and the projected length in the lateral direction of the branch grooves 5 is at least 95% of the pitch length Lp, when the tyre is mounted on a standard rim and inflated to the nominal inflation pressure, and the nominal load is applied. The advantages achieved in this way are of course also the same as in the first mode of embodiment, and so they will not be described again here. As shown in Figure 3 in particular, the projected length in the lateral direction of the branch grooves 5 is at least 95% of the pitch length Lp which is the space between an intermediate point in the projected length in the lateral direction of a branch groove 5 and an intermediate point in the projected length in the lateral direction of an adjacent branch groove 5.

In this mode of embodiment too, in the same way as in the first mode of embodiment, the branch grooves 5 are formed in such a way that the difference between the minimum cross-sectional void ratio in the intermediate rib 3 where the resonators formed by the branch grooves 5 are disposed and the maximum cross-sectional void ratio in said intermediate rib is no greater than 10%. The detailed description of this fact is as described above in relation to the first mode of embodiment. The branch grooves 5 in the second mode of embodiment therefore also make it possible to reduce the air column resonance in the circumferential grooves 2, while at the same time also reducing the tread pattern noise.

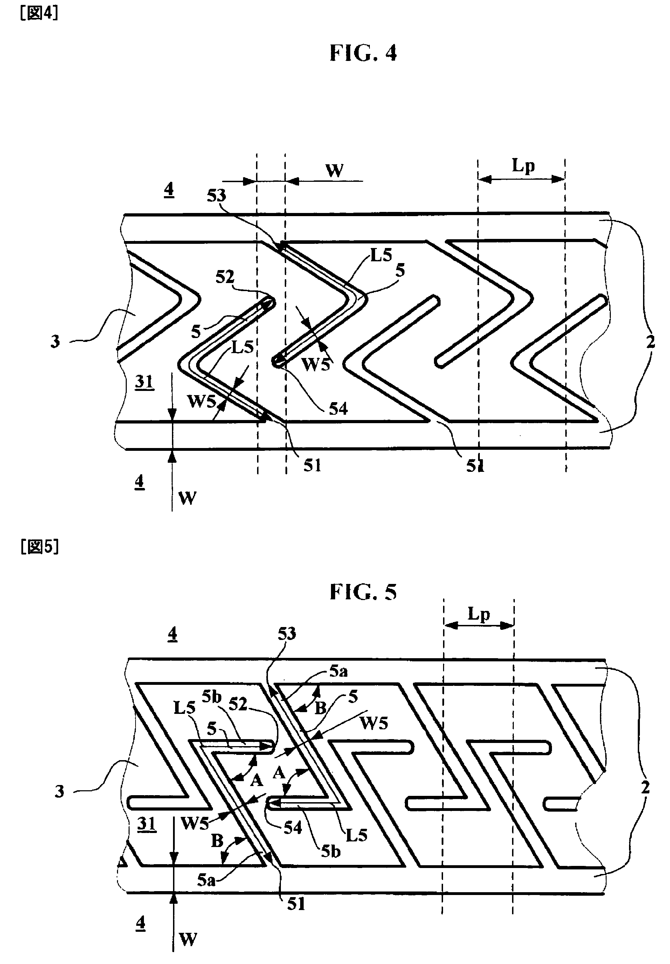

The pneumatic tyre tread according to a third mode of embodiment of the present invention will be described next with the aid of Figure 4.

Figure 4 schematically shows the pneumatic tyre tread according to the third mode of embodiment of the present invention.

As shown in Figure 4, in the third mode of embodiment there are formed: two circumferential grooves 2 of width W, an intermediate rib 3 which is delimited by the circumferential grooves 2, and shoulder ribs 4 which lie outside the two circumferential grooves 2 in the width direction of the tyre, in the same way as in the first mode of embodiment. A plurality of branch grooves 5 are formed on the intermediate rib 3 in such a way as to be continuous on said rib 3 in the direction of rotation of the tyre.

In the third mode of embodiment, the branch grooves 5 have a "<"-shape. These branch grooves 5 are formed in such a way that adjacent branch grooves 5 open alternately into the respective circumferential grooves 2 on both sides of the rib 3, and they have respective openings 51, 53 and end parts 52, 54, in the same way as in the second mode of embodiment. This arrangement makes it possible to reduce the air column resonance in two circumferential grooves 2 at the same time, in the same way as in the second mode of embodiment.

Furthermore, the branch grooves 5 which open into one of the circumferential grooves 2 are formed in such a way that the openings 51 and end parts 52 thereof are present within a region S in the contact surface delimited by spaces which extend parallel to the axis of rotation of the tyre and are equal to the circumferential groove width W.

Furthermore, the branch grooves 5 which open into the other circumferential groove 2 are formed in such a way that the openings 53 and end parts 54 thereof are present within the region S in the contact surface delimited by spaces which extend parallel to the axis of rotation of the tyre and are equal to the groove width W of the circumferential grooves. In this case, the branch grooves 5 are not limited to a linear shape, and they may equally be arcuate, for example.

The advantage of branch grooves 5 configured in this manner lies in the fact that it is possible to shorten the length between two consecutive openings 51 (or openings 53) in the direction of rotation of the tyre in the branch grooves 5 which open into the same circumferential groove 2, while the length L5 of the branch grooves 5 needed to reduce the air column resonance in the circumferential grooves 2 is maintained, and this means that a greater number of resonators formed by the branch grooves 5 can be formed in the contact surface, so that the air column resonance can be effectively reduced.

Here, the following points regarding the length, groove width and projected length in the lateral direction of the branch grooves 5 are the same as in the first mode of embodiment described above: the fact that the length L5 of the branch grooves 5 is at least 40% of the length L of the contact surface, the groove width W5 of the branch grooves 5 is between 10% and 25% of the width W of the circumferential grooves 2, and the projected length in the lateral direction of the branch grooves 5 is at least 95% of the pitch length Lp, when the tyre is mounted on a standard rim and inflated to the nominal inflation pressure, and the nominal load is applied. The advantages achieved in this way are of course also the same as in the first mode of embodiment, and so they will not be described again here. As shown in Figure 4 in particular, the projected length in the lateral direction of the branch grooves 5 is at least 95% of the pitch length Lp which is the space between an intermediate point in the projected length in the lateral direction of a branch groove 5 and an intermediate point in the projected length in the lateral direction of an adjacent branch groove 5.

In this mode of embodiment too, in the same way as in the first mode of embodiment, the branch grooves 5 are formed in such a way that the difference between the minimum cross-sectional void ratio in the intermediate rib 3 where the resonators formed by the branch grooves 5 are disposed and the maximum cross-sectional void ratio in said intermediate rib is no greater than 10%. The detailed description of this fact is as described above in relation to the first mode of embodiment. The branch grooves 5 in the third mode of embodiment therefore also make it possible to reduce the air column resonance in the circumferential grooves 2, while at the same time also reducing the tread pattern noise.

The pneumatic tyre tread according to a fourth mode of embodiment of the present invention will be described next with the aid of Figure 5.

Figure 5 schematically shows the pneumatic tyre tread according to the fourth mode of embodiment of the present invention.

As shown in Figure 5, in the fourth mode of embodiment there are formed: two circumferential grooves 2 of width W, an intermediate rib 3 which is delimited by the circumferential grooves 2, and shoulder ribs 4 which lie outside the two circumferential grooves 2 in the width direction of the tyre, in the same way as in the first mode of embodiment. A plurality of branch grooves 5 are formed on the intermediate rib 3 in such a way as to be continuous on said rib 3 in the direction of rotation of the tyre.

In the same way as in the second and third modes of embodiment, the branch grooves 5 are formed in such a way that adjacent branch grooves 5 open alternately into the respective circumferential grooves 2 on both sides of the rib 3, and they have respective openings 51, 53 and end parts 52, 54. Furthermore, in the same way as in the third mode of embodiment, the branch grooves 5 which open into one of the circumferential grooves 2 are formed in such a way that the openings 51 and end parts 52 thereof are present within a region (not depicted) in the contact surface delimited by spaces which extend parallel to the axis of rotation of the tyre and are equal to the circumferential groove width W. Furthermore, the branch grooves 5 which open into the other circumferential groove 2 are formed in such a way that the openings 53 and end parts 54 thereof are present within a region (not depicted) in the contact surface delimited by spaces which extend parallel to the axis of rotation of the tyre and are equal to the groove width W of the circumferential grooves in the same way as in the third mode of embodiment. The advantages of this configuration are the same as for the second and third modes of embodiment, and they will not be described again here.

In the fourth mode of embodiment, the branch grooves 5 comprise first portions 5a which extend from the openings 51 thereof in a substantially linear fashion obliquely with respect to the circumferential groove 2, and second portions 5b which extend in a substantially linear fashion so as to form an enclosing angle A with the first portions 5a and which terminate at the end parts 52, the branch grooves being formed in such a way that the enclosing angle A between the first portions 5a and the second portions 5b is less than 90°. The enclosing angle A in this mode of embodiment is 50°. It should be noted that the first portions 5a and the second portions 5b may have a curved shape provided that the enclosing angle A is formed.

The advantage of branch grooves 5 configured in this manner lies in the fact that it is possible to shorten the length between two openings 51 (or openings 53) in the direction of rotation of the tyre in the branch grooves 5 which are disposed on the same intermediate rib 3 and open into the same circumferential groove 2, while the length L5 of the branch grooves 5 needed to reduce the air column resonance in the circumferential grooves 2 is maintained, and this means that a greater number of branch groove-shaped resonators can be formed in the contact surface, so that the air column resonance can be effectively reduced.

Here, the following points regarding the length, groove width and projected length in the lateral direction of the branch grooves 5 are the same as in the first mode of embodiment described above: the fact that the length L5 of the branch grooves 5 is at least 40% of the length L of the contact surface, the groove width W5 of the branch grooves 5 is between 10%. and 25% of the width W of the circumferential grooves 2, and the projected length in the lateral direction of the branch grooves 5 is at least 95% of the pitch length Lp, when the tyre is mounted on a standard rim and inflated to the nominal inflation pressure, and the nominal load is applied. The advantages achieved in this way are of course also the same as in the first mode of embodiment, and so they will not be described again here. As shown in Figure 5 in particular, the projected length in the lateral direction of the branch grooves 5 is at least 95% of the pitch length Lp which is the space between an intermediate point in the projected length in the lateral direction of a branch groove 5 and an intermediate point in the projected length in the lateral direction of an adjacent branch groove 5.

In this mode of embodiment too, in the same way as in the first mode of embodiment, the branch grooves 5 are formed in such a way that the difference between the minimum cross-sectional void ratio in the intermediate rib 3 where the resonators formed by the branch grooves 5 are disposed and the maximum cross-sectional void ratio in said intermediate rib is no greater than 10%. The detailed description of this fact is as described above in relation to the first mode of embodiment. The branch grooves 5 in the fourth mode of embodiment therefore also make it possible to reduce the air column resonance in the circumferential grooves 2, while at the same time also reducing the tread pattern noise.

In this mode of embodiment in particular, the design of the pattern arrangement of the branch grooves 5 on the intermediate rib 3 takes account of the cross-sectional void ratio; provided that the branch grooves 5 are formed in such a way that the first portion 5a of the branch grooves 5 is formed to extend obliquely with respect to the circumferential groove 2 and the enclosing angle between the first portion 5a and second portion 5b of the branch grooves 5 is less than 90°, it is a simple matter to ensure that the difference between the minimum cross-sectional void ratio in the rib 3 and the maximum cross-sectional void ratio in said rib is no greater than 10%.

In addition, in this mode of embodiment, the angle of inclination B of the first portion 5a with respect to the circumferential groove 2 is appropriately set in such a way that the difference between the minimum cross-sectional void ratio in the rib 3 and the maximum cross-sectional void ratio in said rib is no greater than 10%. In this mode of embodiment, the angle of inclination B is 50°, which is the same as the abovementioned enclosing angle A, but this is not limiting, and the angles A and B may of course be different, and the angle of inclination B may be other than 50°.

It should be noted that in the first to fourth modes of embodiment described above, the branch grooves 5 are provided on a single rib 3, but it is equally possible for branch grooves 5 of the kind in the first to fourth modes of embodiment to be provided on a plurality of ribs adjacent to two or more circumferential grooves.

It should be noted that the various numerical values and effects mentioned in the first to fourth modes of embodiment described above, for instance "If the branch groove length L5 is less than 40% of the contact surface length L, it is not possible to achieve the length needed for the branch grooves 5 to reduce the air column resonance in the circumferential grooves 2, and the air column resonance reducing effect is lowered" are all findings obtained through experimentation with typical tyre sizes when the tyre is mounted on a standard rim and inflated to the nominal inflation pressure, and the nominal load is applied, in accordance with the abovementioned "standards" (the European "Standards Manual", the US "Year Book", and the Japanese "JATMA Year Book").

### [Key to Symbols]

2 circumferential groove
3 rib
4 shoulder rib
5 branch groove
5a first portion of branch groove
5b second portion of branch groove
31 surface which makes contact with the road surface when the tyre is in operation
51, 53 opening of branch groove into circumferential groove
52, 54 end part of branch groove in rib

## Claims

1. Pneumatic tyre tread (1) comprising at least two circumferential grooves (2); at least one intermediate rib (3) formed between the circumferential grooves (2); two shoulder ribs (4) which are each formed outside the circumferential grooves (2) in the width direction of the tyre; and resonators which are formed with a groove shape in which one end opens into at least one circumferential groove (2) and the other end terminates in the intermediate rib (3) and which reduces air column resonance in the circumferential grooves (2); in the resonators, a plurality of branch grooves (5) comprising openings (51, 53) which open into at least one circumferential groove (2) and end parts (52, 54) which terminate in the intermediate rib (3) are formed in such a way as to open over the whole contact surface, the pneumatic tyre tread (1) being **characterized in that**:
the length L5 of the branch grooves (5) of the resonators is at least 40% of the length L of the contact surface measured in a circumferential direction, and the groove width W5 is between 10% and 25% of the circumferential groove width W, when the tyre is mounted on a standard rim and inflated to the nominal inflation pressure, and the nominal load is applied;
the projected length in the lateral direction of the branch grooves (5) of the resonators is at least 95% of the pitch length Lp, when the tyre is mounted on a standard rim and inflated to the nominal inflation pressure, and the nominal load is applied; and
the difference between the minimum cross-sectional void ratio in the intermediate rib (3) where the branch grooves (5) of the resonators are formed and the maximum cross-sectional void ratio in said intermediate rib (3) is no greater than 10%.

2. Pneumatic tyre tread (1) according to Claim 1, in which the openings (51, 53) and end parts (52, 54) of the branch grooves (5) of the resonators are present within a region in the contact surface delimited by spaces which extend parallel to the axis of rotation of the tyre and are equal to the groove width W of the circumferential grooves (2).

3. Pneumatic tyre tread (1) according to Claim 1 or 2, in which the branch grooves (5) of the resonators have a first portion (5a) including the opening (51, 53) and a second portion (5b) including the end part (52, 54), and the angle A between the first portion (5a) and the second portion (5b) is less than 90°.

4. Pneumatic tyre tread (1) according to any one of Claims 1 to 3, in which the circumferential grooves (2) comprise first circumferential grooves and second circumferential grooves;
the branch grooves (5) of the resonators comprise first branch grooves having a first opening (51) which opens into the first circumferential groove and a first end part (52) which terminates in the intermediate rib (3); and second branch grooves having a second opening (53) which opens into the second circumferential groove and a second end part (54) which terminates in the intermediate rib (3); and
the first openings (51) of the first branch grooves of the resonators and the second openings (53) of the second branch grooves open alternately from the intermediate rib (3) in a continuous fashion in the direction of rotation of the tyre into the first circumferential groove and the second circumferential groove, respectively.

## Patentansprüche

1. Luftreifenlauffläche (1), umfassend mindestens zwei Umfangsrillen (2); mindestens eine Zwischenrippe (3), die zwischen den Umfangsrillen (2) ausgebildet ist; zwei Schulterrippen (4), die jeweils außerhalb der Umfangsrillen (2) in Breitenrichtung des Reifens ausgebildet sind; und Resonatoren, die in einer Rillenform ausgebildet sind, bei der ein Ende in mindestens einer Umfangsrille (2) mündet und das andere Ende in der Zwischenrippe (3) abschließt und die die Luftsäulenresonanz in den Umfangsrillen (2) reduziert; wobei in den Resonatoren mehrere Zweigrillen (5), die Öffnungen (51, 53) umfassen, die in mindestens einer Umfangsrille (2) münden, und Endteile (52, 54), die in der Zwischenrippe (3) abschließen, so ausgebildet sind, dass sie über die gesamte Kontaktfläche geöffnet sind, wobei die Luftreifenlauffläche (1) **dadurch gekennzeichnet ist, dass**:
die Länge L5 der Zweigrillen (5) der Resonatoren, in Umfangsrichtung gemessen, mindestens 40% der Länge L der Kontaktfläche beträgt und die Rillenbreite W5 zwischen 10% und 25% der Umfangsrillenbreite W beträgt, wenn der Reifen auf einer standardmäßigen Felge montiert und auf Nennaufblasdruck aufgeblasen ist und die Nennlast angelegt ist;
die projizierte Länge in lateraler Richtung der Zweigrillen (5) der Resonatoren mindestens 95% der Teilungslänge Lp beträgt, wenn der Reifen auf einer standardmäßigen Felge montiert ist und auf Nennaufblasdruck aufgeblasen ist und die Nennlast angelegt ist; und
die Differenz zwischen dem minimalen Querschnittsnegativprofilanteil in der Zwischenrippe (3), wo die Zweigrillen (5) der Resonatoren ausgebildet sind, und dem maximalen Querschnittsnegativprofilanteil in der Zwischenrippe (3) nicht größer als 10% ist.

2. Luftreifenlauffläche (1) nach Anspruch 1, wobei die Öffnungen (51, 53) und die Endteile (52, 54) der Zweigrillen (5) der Resonatoren in einem Bereich in der Kontaktfläche vorgesehen sind, der durch Räume begrenzt wird, die sich parallel zur Drehachse des Reifens erstrecken und gleich der Rillenbreite W der Umfangsrillen (2) sind.

3. Luftreifenlauffläche (1) nach Anspruch 1 oder 2, wobei die Zweigrillen (5) der Resonatoren einen ersten Abschnitt (5a), der die Öffnung (51, 53) enthält, und einen zweiten Abschnitt (5b), der den Endteil (52, 54) enthält, aufweisen und der Winkel A zwischen dem ersten Abschnitt (5a) und dem zweiten Abschnitt (5b) kleiner als 90° ist.

4. Luftreifenlauffläche (1) nach einem der Ansprüche 1 bis 3, wobei die Umfangsrillen (2) erste Umfangsrillen und zweite Umfangsrillen umfassen;
die Zweigrillen (5) der Resonatoren erste Zweigrillen, die eine erste Öffnung (51), die in der ersten Umfangsrille mündet, und einen ersten Endteil (52), der in der Zwischenrippe (3) abschließt, aufweisen; und zweite Zweigrillen, die eine zweite Öffnung (53), die in der zweiten Umfangsrille mündet, und einen zweiten Endteil (54), der in der Zwischenrippe (3) abschließt, aufweisen, umfassen; und
die ersten Öffnungen (51) der ersten Zweigrillen der Resonatoren und die zweiten Öffnungen (53) der zweiten Zweigrillen abwechselnd von der Zwischenrippe (3) durchgehend in Drehrichtung des Reifens in der ersten Umfangsrille bzw. der zweiten Umfangsrille münden.

## Revendications

1. Bande de roulement (1) d'un pneumatique comprenant au moins deux rainures circonférentielles (2) ; au moins une nervure intermédiaire (3) formée entre les rainures circonférentielles (2) ; deux nervures d'épaulement (4) qui sont chacune formées à l'extérieur des rainures circonférentielles (2) dans la direction de la largeur du pneu ; et des résonateurs qui sont formés en forme de rainure dont une extrémité s'ouvre dans au moins une rainure circonférentielle (2) et dont l'autre extrémité se termine dans la nervure intermédiaire (3) et qui réduit la résonance de la colonne d'air dans les rainures circonférentielles (2) ;
une pluralité de rainures de ramification (5), comprenant des ouvertures (51, 53) qui s'ouvrent dans au moins une rainure circonférentielle (2) et des parties d'extrémité (52, 54) qui se terminent dans la nervure intermédiaire (3), étant formée dans les résonateurs de manière à s'ouvrir sur toute la surface de contact, la bande de roulement (1) du pneumatique étant **caractérisée en ce que** :
la longueur L5 des rainures de ramification (5) des résonateurs représente au moins 40 % de la longueur L de la surface de contact mesurée dans une direction circonférentielle, et la largeur de rainure W5 est comprise entre 10 % et 25 % de la largeur de rainure circonférentielle W, lorsque le pneu est monté sur une jante standard et est gonflé à la pression de gonflage nominale, et que la charge nominale est appliquée ;
la longueur projetée dans la direction latérale des rainures de ramification (5) des résonateurs représente au moins 95 % de la longueur de pas Lp, lorsque le pneu est monté sur une jante standard et est gonflé à la pression de gonflage nominale, et que la charge nominale est appliquée ; et
la différence entre le rapport de creux minimum en section transversale dans la nervure intermédiaire (3) où sont formées les rainures de ramification (5) des résonateurs et le rapport de creux maximum en section transversale dans ladite nervure intermédiaire (3) n'est pas supérieure à 10 %.

2. Bande de roulement (1) d'un pneumatique selon la revendication 1, dans laquelle les ouvertures (51, 53) et les parties d'extrémité (52, 54) des rainures de ramification (5) des résonateurs sont présentes dans une région dans la surface de contact qui est délimitée par des espaces qui s'étendent parallèlement à l'axe de rotation du pneu et qui sont égaux à la largeur de rainure W des rainures circonférentielles (2).

3. Bande de roulement (1) d'un pneumatique selon la revendication 1 ou 2, dans laquelle les rainures de ramification (5) des résonateurs ont une première portion (5a) comprenant l'ouverture (51, 53) et une deuxième portion (5b) comprenant la partie d'extrémité (52, 54), et l'angle A entre la première portion (5a) et la deuxième portion (5b) est inférieur à 90°.

4. Bande de roulement (1) d'un pneumatique selon l'une quelconque des revendications 1 à 3, dans laquelle les rainures circonférentielles (2) comprennent des premières rainures circonférentielles et des deuxièmes rainures circonférentielles ;
les rainures de ramification (5) des résonateurs comprennent des premières rainures de ramification ayant une première ouverture (51) qui s'ouvre dans la première rainure circonférentielle et une première partie d'extrémité (52) qui se termine dans la nervure intermédiaire (3) ; et des deuxièmes rainures de ramification ayant une deuxième ouverture (53) qui s'ouvre dans la deuxième rainure circonférentielle et une deuxième partie d'extrémité (54) qui se termine dans la nervure intermédiaire (3) ; et
les premières ouvertures (51) des premières rainures de ramification des résonateurs et les deuxièmes ouvertures (53) des deuxièmes rainures de ramification s'ouvrent en alternance depuis la nervure intermédiaire (3) de manière continue dans la direction de rotation du pneu dans la première rainure circonférentielle et la deuxième rainure circonférentielle, respectivement.
